# EUROPEAN PATENT APPLICATION

(11) **EP 4 184 123 A1**
(43) Date of publication of application: **24.05.2023**
(21) Application number: 21208996.5
(22) Date of filing: 18.11.2021
(51) Int. Cl.: G01D 5/20

(54) **RADIAL INDUCTIVE POSITION SENSOR FOR DETECTING A ROTATIONAL MOVEMENT, HIGH-RESOLUTION POSITION SENSOR SYSTEM AND TORQUE SENSOR SYSTEM**

(71) Applicant: Renesas Electronics America Inc., Milpitas, California 95035 (US)
(72) Inventor: PICHLER, Rudolf, 8152 Stallhofen (AT); BUCHINGER, Andreas, 3340 Waldhofen/Ybbs (AT); HARTL, Harald, 8054 Graz-Stras (AT); GOMBOR, Bence, 8020 Graz (AT)
(74) Representative: Lippert Stachow Patentanwälte Rechtsanwälte Partnerschaft mbB

(57) **Abstract**

The invention relates to a radial inductive position sensor (1) for detecting a rotational movement, particularly for motor control systems, comprising at least one transmitter coil (5), at least one receiver coil pair (3, 4) with a first receiver coil (3) and a second receiver coil (4), and a moving conductive target (2), which is connected or connectable to a rotating shaft (8), wherein the at least one transmitter coil (5) and the at least one receiver coil pair (3, 4) are arranged on a substrate (7),
which is characterized in that
the substrate (7) has a radial configuration for at least partially surrounding the moving conductive target (2) and/or the rotating shaft (8).

The invention further relates to a high-resolution position sensor system (13) and a torque sensor system (14) comprising a radial inductive position sensor (1).

## Description

The invention relates to a radial inductive position sensor for detecting a rotational movement, particularly for motor control systems. The invention further relates to a high-resolution position sensor system and a torque sensor system comprising a radial inductive position sensor.

Many applications need position feedback of a rotating member, like for example in motor control systems. In most cases, an additional position sensor is mounted at one end of a rotating shaft of the motor to generate the required position information. From the prior art, magnetic position sensors and inductive position sensors are known. Since current carrying parts like motor cables or battery cables, a rotating motor package, the stator of the motor or additional equipment like a motor brake may cause magnetic fields, the use of inductive position sensors is preferred in motor control systems to provide robustness against such magnetic fields.

Inductive position sensors implement a magnet-free technology, utilizing the physical principles of eddy currents or inductive coupling to detect the position of a target that is moving above a set of coils, consisting for example of one transmitter coil and two receiver coils, particularly a sine receiver coil and a cosine receiver coil.

In a practical implementation of the three coils, one transmitter coil and two receiver coils, are typically provided as copper traces on a printed circuit board (PCB). They are arranged such that the transmitter coil induces a secondary voltage in the two receiver coils, which depends on the position of the conductive, e.g. metallic, target above the receiver coils. Therefore, the inductive sensor comprises or is connected to an oscillator that generates a radio-frequency signal, which is applied to the transmitter coil to create a high frequency magnetic field. This high frequency magnetic field is picked up by the receiver coils, particularly the sine receiver coil and the cosine receiver coil. Depending on the position of the conductive target above the coils, the secondary voltage picked up by the receiver coils is changing in amplitude, allowing the determination of the target's position by analysing this effect. For example, the target position is calculated by the arctangent of the sine signal divided by the cosine signal. The calculation is performed by a processing unit, which is connected to the position sensor or integral part of the position sensor.

The conductive target can be any kind of metal, such as aluminium, steel or a printed circuit board with a printed copper layer. Usually, an inductive position sensor comprises a metallic target. However, the inductive position sensor may use different types of targets, such as wire loops or passive resonant circuits comprised of inductances and capacitors.

According to the inductive position sensor for detecting a rotational movement known from the prior art, the transmitter coil and the receiver coils are arranged in a plane perpendicular to the longitudinal axis of the rotating shaft. The conductive target is attached to the rotating shaft and extends in a radial direction, so that the conductive target is moving above the set of coils. This configuration is referred to as an axial inductive position sensor as the set of coils is arranged in an axial plane.

The accuracy of the inductive position sensor depends on the airgap between the set of coils and the conductive target. By increasing the airgap, the distance between the set of coils and the conductive target increases, which results in reduced amplitudes, increased signal noise and affected system linearity. A further source of error is an axial tolerance or axial play of the rotating shaft, to which the conductive target is connected. Due to the axial tolerance or axial play the distances between the set of coils and the moving conductive target may continuously change over time and/or position.

It is therefore an object of the present invention to provide an inductive position sensor for detecting a rotational movement, which is robust against an axial tolerance, particularly axial play, of the rotating shaft.

According to the invention, the object is solved by a radial inductive position sensor for detecting a rotational movement, particularly for motor control systems, comprising at least one transmitter coil, at least one receiver coil pair with a first receiver coil and a second receiver coil, and a moving conductive target, which is connected or connectable to a rotating shaft,
wherein the at least one transmitter coil and the at least one receiver coil pair are arranged on a substrate,
which is characterized in that
the substrate has a radial configuration for at least partially surrounding the moving conductive target and/or the rotating shaft.

In the radial configuration according to the invention, the set of coils, i.e. the at least one transmitter coil and the at least one receiver coil pair, are arranged in a plane that is radially surrounding the moving conductive target and/or the rotating shaft. Thus, the substrate on which the coils are arranged has a circular shape and at least partially surrounds the moving conductive target and/or the rotating shaft. The substrate can have the form of a hollow cylinder, a C-shape, a U-shape or similar.

The radial configuration of the inductive position sensor has the advantage that an axial tolerance or axial play of the rotating shaft has no respectively only an insignificant impact on the accuracy of the position sensor, particularly on the signal amplitudes of the receiver coil pair. Thus, the radial inductive position sensor according to the invention is robust against errors resulting from axial tolerances or axial play of the rotating shaft.

A further advantage of the radial configuration is a cost reduction because the size of the substrate can be optimized, whereas the axial configuration known from the prior art usually requires a cut-off in the substrate for the rotating shaft. Another advantage is a weight reduction due to target design optimization because the size of the conductive target can be smaller for the radial configuration compared to an axial configuration of the inductive position sensor, particularly if the conductive target is arranged inside the circular substrate.

Further electronic components, like a processing unit for processing the signals of the receiver coil pair or controlling the oscillator connected to the at least one transmitter coil, can be arranged on the same substrate as the set of coils or be a separate part.

Pursuant to a variant of the invention, the substrate is a printed circuit board (PCB) and the at least one transmitter coil and the at least one receiver coil pair are formed by copper traces on the PCB. In this way, the radial inductive position sensor can be manufactured easily, i.e. cheap and fast.

According to a preferred variant of the invention, the substrate or the PCB is flexible or has a thickness that allows the radial configuration of the substrate or the PCB consists of multiple parts that can be arranged radially around the rotating shaft. For example, a flexible substrate or PCB can be mounted on a cylindrical guide or housing comprising alignment fixtures for the flexible substrate or PCB. The cylindrical guide or housing can completely or partly surround the moving conductive target and/or the rotating shaft. If the substrate or PCB consists of multiple parts, these parts can have a higher rigidity. The separate parts together at least partially surround the moving conductive target and/or the rotating shaft.

In variant of the invention, the first receiver coil is a sine receiver coil and the second receiver coil is a cosine receiver coil. The invention is not limited to this configuration, but the first receiver coil and the second receiver coil should provide phase shifted signals.

Pursuant to a variant of the invention, the receiver coil pair, particularly the first receiver coil and the second receiver coil, has one period for detecting the absolute position of the moving conductive target. The receiver coil pair has one period, so that the radial inductive position sensor can detect the absolute position of the rotating shaft, i.e. a position between 0° and 360°. The moving conductive target is arranged above the receiver coil pair and generates a signal in the receiver coil pair depending on the rotational position of the rotating shaft. The circular extend of the receiver coil pair and the circular extend of the moving conductive target are adapted that the receiver coil pair generates unique signals over a 360° rotating of the rotational shaft. Preferably, the receiver coil pair completely, or substantially completely, surrounds the moving conductive target and/or the rotating shaft and due to the one period of the receiver coil pair the absolute position of the moving conductive target can be detected.

According to an alternative variant of the invention, the receiver coil pair, particularly the first receiver coil and the second receiver coil, has multiple periods for detecting a high-resolution position of the moving conductive target. Due to the multiple periods of the receiver coil pair, the position detector has a higher precision. However, the radial inductive position sensor in this configuration cannot detect the absolute position of the rotating conductive target, as there are multiple positions around the complete rotation of the conductive target, which generate the same signal in the receiver coil pair. For example, if the receiver coil pair has four periods, the inductive position sensor can detect positions between 0° and 90° with a higher precision, but not the absolute position. Preferably, the receiver coil pair completely, or substantially completely, surrounds the moving conductive target and/or the rotating shaft and due to the multiple periods of the receiver coil pair the position of the moving conductive target can be detected with a higher precision. However, it is also possible that the receiver coil pair surrounds the moving conductive target and/or the rotating shaft only partially or in separated segments, i.e. in distributed segments. The substrate may completely or partially surround the moving conductive target and/or the rotating shaft in the latter embodiment, as long as the receiver coil pair surrounds the moving conductive target and/or the rotating shaft only partially or in separated segments.

In a preferred embodiment of the invention, the radial inductive position sensor comprises a first receiver coil pair having one period and a second receiver coil pair having multiple periods.

Thus, the first receiver coil pair can determine the absolute position of the moving conductive target and the second receiver coil pair can determine the position of the moving conductive target with a higher precision. Combining the results of the first receiver coil pair and the second receiver coil pair results in a radial inductive position sensor that determines the position of the moving conductive target for all absolute positions with a higher precision.

Pursuant to a variant of the invention, the moving conductive target has one active portion or multiple active portions. The multiple active portions are preferably equally distributed around the circumference of the moving conductive target. If the receiver coil pair completely or substantially completely surrounds the moving conductive target and/or the rotating shaft, the moving conductive target connected to the rotating shaft may only have one active portion. This one active portion is sufficient to determine the absolute position or high-resolution position, depending on the number of periods of the receiver coil pair. If the receiver coil pair is only surrounding the moving conductive target and/or the rotating shaft partially or in segments, the moving conductive target connected to the rotating shaft may have multiple active portions. The multiple active portions are arranged such that always one active portion is above the receiver coil pair. If for example the receiver coil pair covers 90° of the rotating shaft, the moving conductive target has four active portions arranged equally spaced on the moving conductive target, i.e. spaced apart by 90°. Thus, always one active portion is above the receiver coil pair at any time.

In a preferred variant, the moving conductive target has a circular shape, as it is connected to the rotating shaft. The moving conductive target can have one or more portion, particularly active portions, that radially extend from the rotating shaft close to the receiver coil pair arranged on the substrate surrounding the moving conductive target and/or the rotating shaft. The moving conductive target can be made of or comprises active portions made of any conductive material, like e.g. copper, aluminium, steel and so on. The moving conductive target can be solid or be made of a thin material, bend or cut to a particular shape. The moving conductive target can also be made of a substrate with one or more conductive surface parts.

Particularly, the design of the receiver coil pair and of the active portions of the moving conductive target match each other, so that at any time exactly one active portion is arranged above the receiver coil pair.

An active portion of the moving conductive target according to the invention is a portion that is cooperating with the receiver coil pair of the radial inductive position sensor. Thus, an active portion of the moving conductive target is in some positions of the rotating shaft respectively of the moving conductive target arranged above the receiver coil pair to adapt the signal of the receiver coil pair received from the at least one transmitter coil.

According to a variant of the invention, the substrate partially or completely surrounds the moving conductive target and/or the rotating shaft. A substrate completely surrounding the moving conductive target and/or the rotating shaft is required if the receiver coil pair completely, or substantially completely, surrounds the moving conductive target and/or the rotating shaft. If the receiver coil pair only partially surrounds the moving conductive target and/or the rotating shaft, the substrate may also only partially surround the moving conductive target and/or the rotating shaft. If the receiver coil pair surrounds the moving conductive target and/or the rotating shaft in one or more segments, the substrate may partially or completely surround the moving conductive target and/or the rotating shaft, depending on the distribution of the segments around the rotating shaft.

Pursuant to a variant of the invention, the moving conductive target is arranged inside or outside the radial substrate. If the moving conductive target is arranged inside the radial substrate it is smaller, resulting in a weight optimization of the radial inductive position sensor.

In a preferred embodiment of the invention, the at least one transmitter coil and/or the at least one receiver coil pair are implemented twice on the substrate, particularly on separate layers or with an interleaved or distributed coil design. This provides a redundant design, particularly required by safety critical system like in automotive applications.

The invention further relates to a high-resolution position sensor system, comprising a first inductive position sensor and a second inductive position sensor, wherein at least one inductive position sensor is a radial inductive position sensor according to invention and wherein the periods of the receiver coil pairs of the first inductive position sensor and the second inductive position sensor are different. In a particularly preferred variant of the invention, the receiver coil pair of one inductive position sensor has one period for detecting the absolute position of the moving conductive target and the receiver coil pair of the other inductive position sensor has multiple periods for detecting a high-resolution position of the moving conductive target or wherein the periods of the receiver coil pairs of the first inductive position sensor and the second inductive position sensor are different to provide a Nonius scale.

The high-resolution position sensor according to the invention uses two different inductive position sensors to determine the absolute position of the moving conductive target with a high-resolution. For example, one inductive position sensor determines the absolute position using a receiver coil pair having one period, whereas the other inductive position sensor uses multiple periods to determine the position of the moving conductive target with a high-resolution, but being unable to determine the absolute position. The same effect can be achieved by two inductive position sensors having different periods, which are designed to provide a Nonius scale known e.g. from Vernier calliper.

At least one of the inductive position sensors is a radial inductive position sensor according to the invention, particularly the one providing the high-resolution result. The other inductive position sensor, preferably the one determining the absolute position, can be e.g. an axial inductive position sensor known from the prior art or also a radial inductive position sensor according to the invention. For providing a Nonius scale, preferably two radial inductive position sensors according to the invention are used.

The invention further relates to a torque sensor system comprising a first inductive position sensor and a second inductive position sensor, wherein at least one inductive position sensor is a radial inductive position sensor according to the invention, wherein the first inductive position sensor and the second inductive position sensor are mounted on different ends of a rotating shaft subject to torque. The results of the two inductive position sensors mounted at different ends of the rotating shaft can be used to determine a torque of the rotating shaft. According to a variant of the invention, the torque sensor system can comprise at least one further inductive position sensor for providing a high-resolution position and torque sensor system. The at least one further inductive position sensor can provide in combination with the first inductive position sensor and/or the second inductive position sensor the above-described high-resolution position sensor system.

The torque sensor system preferably comprises two identical inductive position sensors, particularly two radial inductive position sensors according to the invention. However, only one radial inductive position sensor according to the invention in combination with an axial inductive position sensor according to the prior art could be used, particularly if the radial inductive position sensor is mounted to the end of the rotating shaft with higher tolerance or higher axial play and the axial inductive position sensor is mounted to the end with lower axial tolerance or axial play.

In the followings, the invention will be further explained with respect to the embodiments shown in the figures. It shows:
- Fig. 1: a schematic view of an embodiment of an axial inductive position sensor according to the prior art,
- Fig. 2: a schematic view of a first embodiment of a radial inductive position sensor according to the invention,
- Fig. 3: a detailed view of the printed circuit board with the set of coils of the radial inductive position sensor of Fig. 2,
- Fig. 4: different configurations of the set of coils and the moving conductive target of a radial inductive position sensor according to the invention,
- Fig. 5: a detailed view of another embodiment of a substrate with a set of coils for a radial inductive position sensor according to the invention,
- Fig. 6: a schematic view of a high-resolution position sensor system comprising a radial inductive position sensor according to the invention,
- Fig. 7: a schematic view of a torque sensor system comprising an axial inductive position sensor according to the invention, and
- Fig. 8: a schematic view of a torque and high-resolution position sensor system comprising a radial inductive position sensor according to the invention.

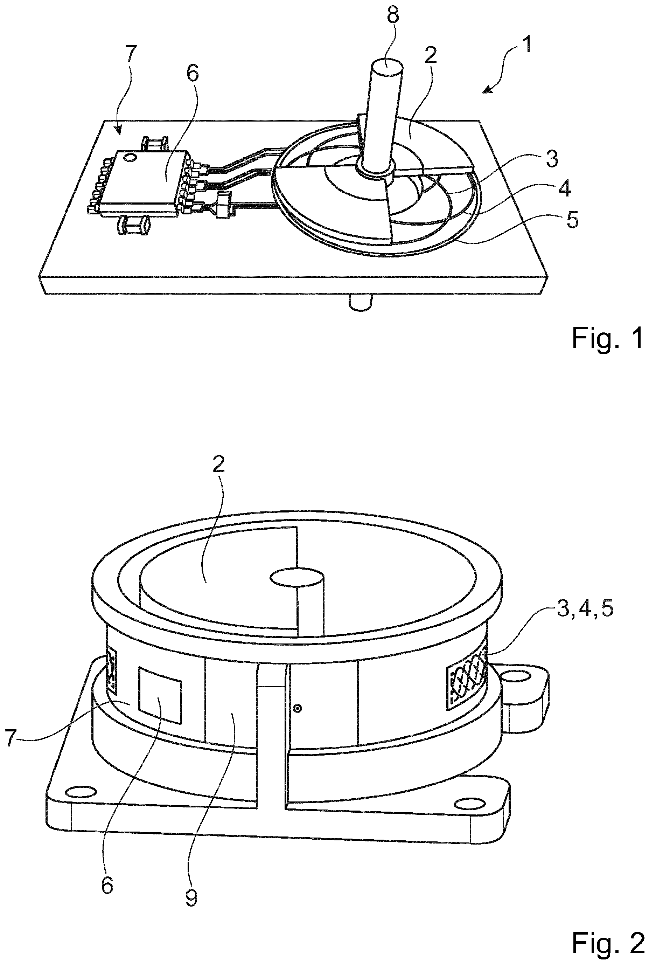

Fig. 1 shows a schematic view of an embodiment of an axial inductive position sensor 1 for detecting a rotational movement according to the prior art. The inductive position sensor 1 detects the movement of a conductive target 2 relative to a receiver coil pair 3, 4, comprising a sine receiver coil 3 and a cosine receiver coil 4, which generate a corresponding analog sine output signal and a corresponding analog cosine output signal.

The position sensor 1 of Fig. 1 is an inductive position sensor 1 implementing a magnet-free technology, utilizing the physical principles of eddy currents or inductive coupling to detect the position of the conductive target 2 that is moving above a set of coils 3, 4, 5, consisting for example of one transmitter coil 5 and the receiver coil pair 3, 4, particularly the sine receiver coil 3 and the cosine receiver coil 4.

In a practical implementation of the three coils 3, 4, 5, one transmitter coil 5 and two receiver coils 3, 4, are typically provided as copper traces on a printed circuit board (PCB) 7. They are arranged such that the transmitter coil 5 induces a secondary voltage in the two receiver coils 3, 4, which depends on the position of the conductive, e.g. metallic, target 2 above the receiver coils 3, 4. Therefore, the inductive position sensor 1 comprises or is connected to an oscillator that generates a radio-frequency signal, which is applied to the transmitter coil 5 to create a high frequency magnetic field. This high frequency magnetic field is picked up by the receiver coils 3, 4, particularly the sine receiver coil 3 and the cosine receiver coil 4. Depending on the position of the conductive target 2 above the coils 3, 4, 5, the secondary voltage picked up by the receiver coils 3, 4 is changing in amplitude, allowing the determination of the target's position by analysing this effect. For example, the target position is calculated by the arctangent of the sine signal divided by the cosine signal. The calculation is performed by a processing unit 6, which is arranged on the PCB 7 or is a separate component connected to the receiver coil pair 3, 4.

According to the prior art, the inductive position sensor 1 for detecting a rotational movement, the transmitter coil 5 and the receiver coil pair 3, 4 are arranged on the substrate 7 extending in a plane perpendicular to the longitudinal axis of the rotating shaft 8, as shown in Fig. 1. The conductive target 2 is attached to the rotating shaft 8 and extends in a radial direction, so that the conductive target 2 is moving above the set of coils 3, 4, 5. This configuration is referred to as an axial inductive position sensor 1 as the set of coils 3, 4, 5 is arranged in an axial plane.

A signal representation of the target's position over the coils 3, 4, 5 is obtained by demodulating and processing the secondary voltages from the receiver coils 3, 4 in the processing unit 6. Usually, after filtering the receiver signals are demodulated and amplified, then converted to a digital signal by an analog-to-digital converter and further processed in a digital signal processor, like being converted from sine and cosine signals into an angle representation by means of a CORDIC algorithm, transforming rectangular coordinates to polar coordinates. Following this digital signal processing, a signal representative of the target's position over the coils 3, 4, 5 is available in digital format and fed to an output interface of the inductive position sensor 1.

The accuracy of the inductive position sensor 1 shown in Fig. 1 depends on the airgap between the set of coils 3, 4, 5 and the conductive target 2. By increasing the airgap, the distance between the set of coils 3, 4, 5 and the conductive target 2 increases, which results in reduced amplitudes, increased signal noise and affected system linearity. A further source of error is an axial tolerance or axial play of the rotating shaft 8, to which the conductive target 2 is connected. Due to the axial tolerance or axial play the distances between the set of coils 3, 4, 5 and the moving conductive target 2 may continuously change over time and/or position.

Fig. 2 shows a schematic view of a first embodiment of a radial inductive position sensor 1 for detecting a rotational movement according to the invention. The radial inductive position sensor 1 shown in Fig. 2 comprises a transmitter coil 5 and a receiver coil pair 3, 4 with a first receiver coil 3 and a second receiver coil 4. The first receiver coil 3 is a sine receiver coil and the second receiver coil 4 is a cosine receiver coil. The transmitter coil 5 and the receiver coil pair 3, 4 are arranged on a substrate 7. The substrate 7 is for example a printed circuit board (PCB) and the transmitter coil 5 and the receiver coil pair 3, 4 are formed by copper traces on the PCB.

The radial inductive position sensor 1 shown in Fig. 2 further comprises a moving conductive target 2, which is connectable to a rotating shaft 8, particularly of a motor. The rotating shaft 8 is not shown in Fig. 2. Alternatively, the moving conductive target 2 can be connected to the rotating shaft 8.

According to the present invention, the substrate 7 has a radial configuration and at least partially surrounds the moving conductive target 2. According to the first embodiment shown in Fig. 2, the substrate 7 partially surrounds the moving conductive target 2.

In the radial configuration according to the invention, the set of coils 3, 4, 5, i.e. the transmitter coil 5 and the receiver coil pair 3, 4, are arranged in a plane that is radially surrounding the moving conductive target 2 and the rotating shaft 8, once the moving conductive target 2 has been connected to the rotating shaft 8. Thus, the substrate 7 on which the coils 3, 4 ,5 are arranged has a circular shape and at least partially surrounds the moving conductive target 2 and/or the rotating shaft 8. The substrate 7 can have the form of a hollow cylinder, a C-shape, a U-shape or similar.

The radial configuration of the inductive position sensor 1 has the advantage that an axial tolerance or axial play of the rotating shaft 8 has no respectively only an insignificant impact on the accuracy of the position sensor 1, particularly on the signal amplitudes of the receiver coil pair 3, 4. Thus, the radial inductive position sensor 1 according to the invention is robust against errors resulting from axial tolerances or axial play of the rotating shaft 8.

A further advantage of the radial configuration is a cost reduction because the size of the substrate 7 can be optimized, whereas the axial configuration known from the prior art as shown in Fig. 1 usually requires a cut-off in the substrate 7 for the rotating shaft 8. Another advantage is a weight reduction due to target design optimization because the size of the moving conductive target 2 can be smaller for the radial configuration compared to an axial configuration of the inductive position sensor 1, particularly if the moving conductive target 2 is arranged inside the circular substrate 7.

Further electronic components, like the processing unit 6 for processing the signals of the receiver coil pair 3, 4 or controlling an oscillator connected to the transmitter coil 5, can be arranged on the same substrate 7 as the set of coils 3, 4, 5 or be a separate part.

The substrate 7 respectively PCB is flexible or has a thickness that allows the radial configuration of the substrate 7 respectively PCB. The flexible substrate 7 respectively PCB is held in the radial configuration by a housing or guide 9, to which the flexible substrate 7 respectively PCB is connected, e.g. by fixtures or mountings.

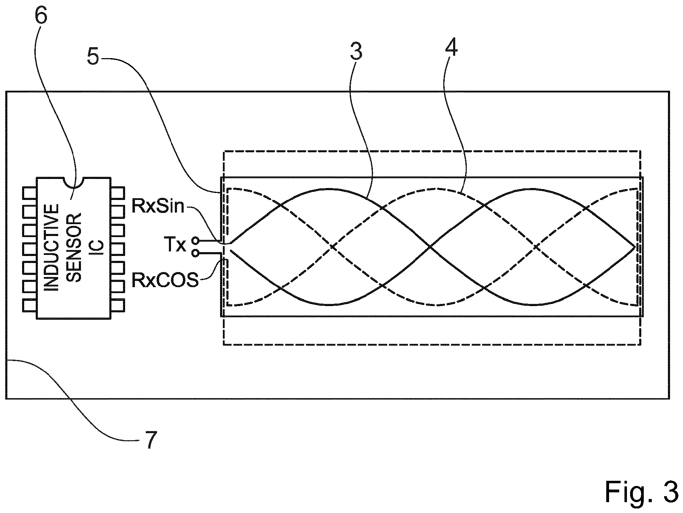

Fig. 3 shows a detailed view of the PCB 7 with the set of coils 3, 4, 5 of the radial inductive position sensor 1 of Fig. 2. The first receiver coil 3 is a sine receiver coil 3 with one period along the movement path of the moving conductive target 2 and the second receiver coil 4 is a cosine receiver coil 4 with one period along the movement path of the moving conductive target 2. Although the substrate 7 is shown in Fig. 3 in plane it is actually radially surrounding the moving conductive target 2 of the radial inductive position sensor 1. Fig. 3 particularly shows the configuration of the set of coils 3, 4, 5 on the substrate 7 and not the positioning of the substrate 7 relative to the moving conductive target 2 and/or rotating shaft 8.

As shown in Fig. 2, the moving conductive target 2 has one active portion, i.e. conductive part above the set of coils 3, 4, 5 to adapt the signals received by the receiver coils 3, 4 in response to the signal emitted from the transmitter coil 5, which is adapted by the position of the moving conductive target 2, particularly the position of the active portion of the moving conductive target 2. The receiver coil pair 3, 4 with one period along the movement path of the moving conductive target 2 can detect the absolute position of the moving conductive target 2.

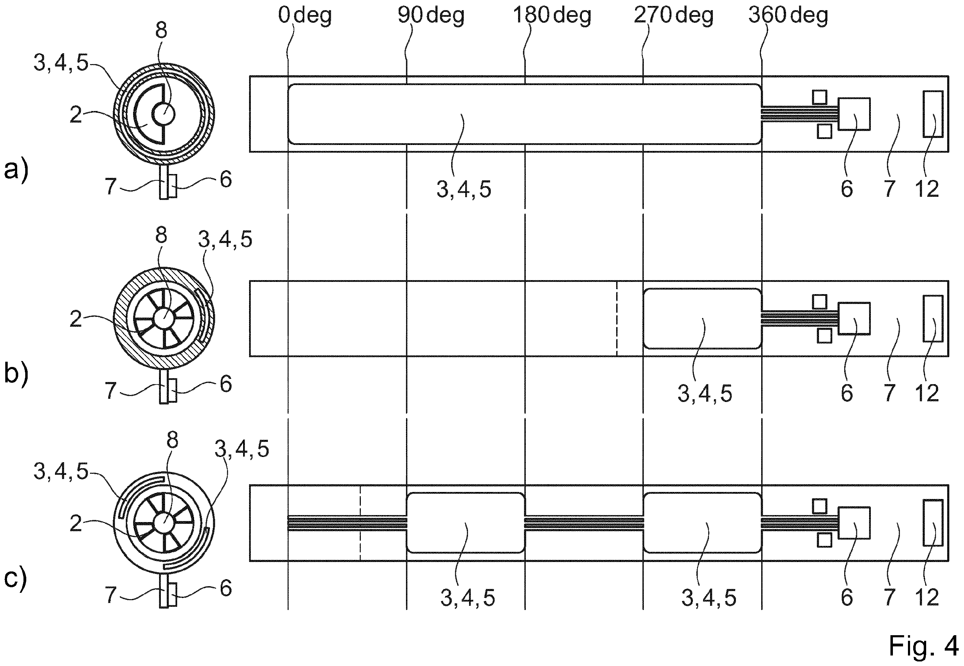

Fig. 4 shows different configurations of the set of coils 3, 4, 5 and the moving conductive target 2 of a radial inductive position sensor 1 according to the invention. The left-hand side of Fig. 4 shows a top or bottom view of radial inductive position sensor 1 along the axis of the rotating shaft 8 and the righthand side shows a plane view of the substrate 7 according to Fig. 3.

In all three embodiments shown in Figs. 4a to 4c, the substrate 7 completely surrounds the moving conductive target 2 and rotating shaft 8, which are arranged centrally inside the circular substrate 7. The portion of the substrate 7 comprising the processing unit 6, a connector and/or other components extends radially outside, as shown on the left-hand side of Figs. 4a to 4c.

Furthermore, in all three embodiments shown in Figs. 4a to 4c the pair of receiver coils 3, 4 comprise one period along the portion of the substrate covered by the set of coils 3, 4, 5.

According to Fig. 4a, the set of coils 3, 4, 5 extends along the complete circumference of the moving conductive target 2 and rotating shaft 8, i.e. over 360°. Over this 360° the first receiver coil 3 and the second receiver coil 4 each have one period, as for example shown in Fig. 3. In this embodiment, the moving conductive target 2 has one active portion, which for example extends over 180°. This embodiment is used to determine the absolute position of the moving conductive target 2.

According to Fig. 4b, the set of coils 3, 4, 5 extends along 90° of the circumference of the moving conductive target 2 and rotating shaft 8. In this embodiment the moving target 2 has four active portions spaced by 90°, so that always one active portion is arranged above the set of coils. In this embodiment, the radial inductive position sensor 1 provides a high-resolution signal for determining the position of the moving conductive target 2. However, the radial inductive position sensor 1 according to Fig. 4b is unable to determine the absolute position of the moving conductive target 2.

According to Fig. 4c, the radial inductive position sensor comprises a second set of coils 3, 4, 5, wherein each set of coils 3, 4, 5 extends along 90°of the circumference of the moving conductive target 2 with 4 portions and the rotating shaft 8. The first set of coils 3, 4, 5 and the second set of coils 3, 4, 5 are located on opposite sides of the rotating shaft, i.e. they are spaced about 180° from each other. The two sets of coils 3, 4, 5 are separate in a redundant configuration or are connected in series (3 with 3, 4 with 4, 5 with 5). The transmitter coils 5 of the two set of coils 3, 4, 5 can be connected in series to an oscillator, so that they are operated simultaneously. Like in Fig. 4b, the moving conductive target 2 has four active portions spaced by 90°.

The substrate of the embodiments shown in Fig. 4b and 4c must not completely surround the moving conductive target 2 and rotating shaft 8. Particularly, the portions of the substrate without any coil portions or other components could be removed, as indicated by the dashed lines in Fig. 4b and 4c. This simplifies the mounting of the radial inductive position sensor 1 because it could be mounted sideways and thus independent of the spacing next to the end of the rotating shaft 8.

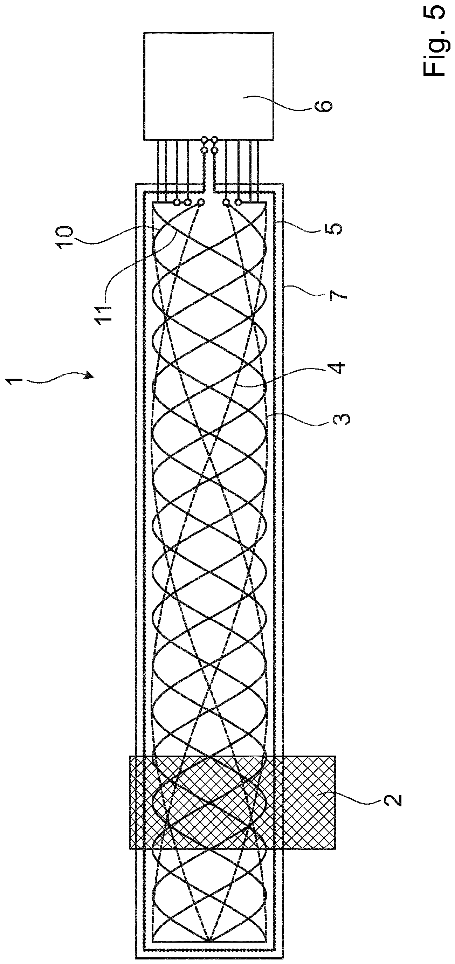

Fig. 5 shows a detailed view of another embodiment of a substrate 7 with a set of coils 3, 4, 5 for a radial inductive position sensor 1 according to the invention. According to the embodiment shown in Fig. 5, the radial inductive position sensor 1 comprises one transmitter coil 5, a first receiver coil pair 3, 4 and a second receiver coil pair 10, 11, which are arranged on substrate 7. The transmitter coil 5, the first receiver coil pair 3, 4 and the second receiver coil pair 10, 11 are connected to an external processing unit 6. The first receiver coil pair 3, 4 comprises a first receiver coil 3 and a second receiver coil 4 and the second receiver coil pair 10, 11 comprises a third receiver coil 10 and a fourth receiver coil 11.

According to the invention, the substrate 7 has a radial configuration for at least partially surrounding the moving conductive target 2 and/or the rotating shaft 8. The moving conductive target 2 has one active portion, which moves above the set of coils 3, 4, 5, 10, 11 along a 360° movement. The first receiver coil pair 3, 4 has one period along the substrate 7 and can be used to determine the absolute position of the moving conductive target 2. The second receiver coil pair 10, 11 has multiple periods along the substrate 7 and can be used to determine a high-resolution position of the moving conductive target 2. Combining the results of the first receiver coil pair 3, 4 and the second receiver coil pair 10, 11 results in a high-resolution absolute position detection of the moving conductive target 2.

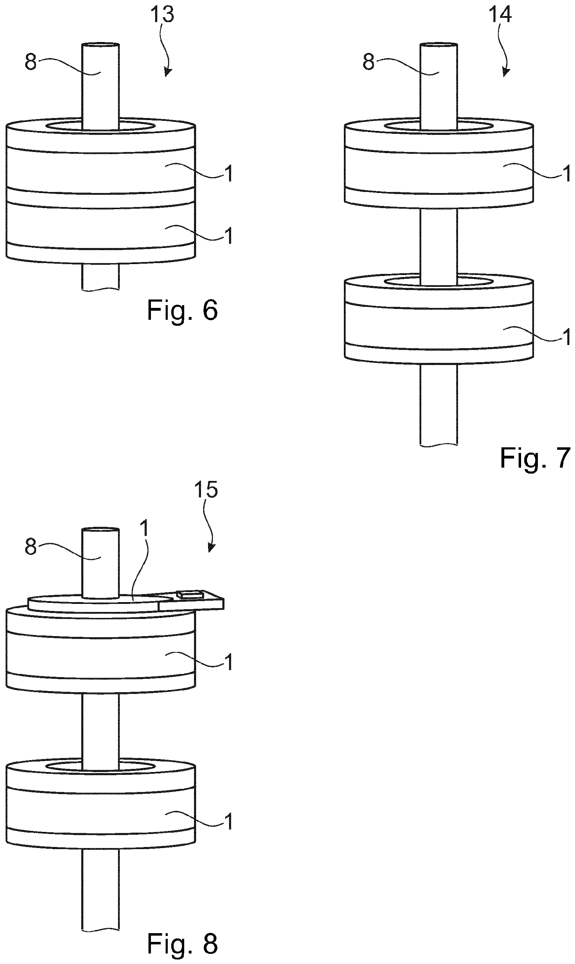

Fig. 6 shows a schematic view of a high-resolution position sensor system 13 comprising at least two inductive position sensors 1. According to the embodiment shown in Fig. 6, both inductive position sensors 1 are radial inductive position sensors 1 according to the invention. However, it is sufficient if only one position sensor 1 is a radial inductive position sensor 1, while the other inductive position sensor 1 is an axial inductive position sensor 1 according to the prior art. According to the present invention, the periods of the receiver coil pairs 3, 4 of the first radial inductive position sensor 1 and the second radial inductive position sensor 1 are different. Particularly, the receiver coil pair 3, 4 of one radial inductive position sensor 1 has one period for detecting the absolute position of the moving conductive target 2 and the receiver coil pair 3, 4 of the other inductive position sensor 1 has multiple periods for detecting a high-resolution position of the moving conductive target 2. Alternatively, the periods of the receiver coil pairs 3, 4 of the first radial inductive position sensor 1 and the inductive second position sensor 1 are different to provide a Nonius scale.

The high-resolution position sensor system 13 shown in Fig. 6 uses two different radial inductive position sensors 1 to determine the absolute position of the conductive moving target with a high-resolution. Both radial inductive position sensors 1 are mounted next to each other around the rotating shaft 8, to which a moving conductive target 2 is mounted.

Fig. 7 shows a schematic view of a torque sensor system 14 comprising two radial inductive position sensors 1 according to the invention. The first radial inductive position sensor 1 and the second radial inductive position sensor 1 are mounted on different ends of a rotating shaft 8 subject to torque. By measuring the position of the different ends of the rotating shaft 8 using the first and second radial inductive position sensors 1 a torque of the rotating between the two radial inductive position sensors 1 can be determined by simply comparing the results of the first and second radial inductive position sensors 1.

Fig. 8 shows a schematic view of a torque and high-resolution position sensor system 15 comprising two radial inductive position sensors 1 according to the invention and an axial inductive position sensor 1 according to the prior art 1. The configuration of the two radial inductive position sensors 1 corresponds to the torque sensor system shown in Fig. 7. The additional axial inductive position sensor 1 is used for providing an absolute high-resolution position of the moving conductive target 2 mounted to the rotating shaft 8 in combination with one of the radial inductive position sensors 1. Alternatively, a third radial inductive position sensor 1 could be used instead of the axial inductive position sensor 1. Preferably, the axial inductive position sensor 1 is mounted to an end of the rotating shaft 8 having less axial tolerance or axial play.

### List of reference numerals

- 1: inductive position sensor
- 2: moving conductive target
- 3: first receiver coil
- 4: second receiver coil
- 5: transmitter coil
- 6: processing unit
- 7: substrate / printed circuit board
- 8: rotating shaft
- 9: guide / housing
- 10: third receiver coil
- 11: fourth receiver coil
- 12: connector
- 13: high-resolution position sensor system
- 14: torque sensor system
- 15: torque and high-resolution position sensor system

## Claims

1. A radial inductive position sensor (1) for detecting a rotational movement, comprising at least one transmitter coil (5), at least one receiver coil pair (3, 4) with a first receiver coil (3) and a second receiver coil (4), and a moving conductive target (2), which is connected or connectable to a rotating shaft (8),
wherein the at least one transmitter coil (5) and the at least one receiver coil pair (3, 4) are arranged on a substrate (7),
wherein the substrate (7) has a radial configuration for at least partially surrounding the moving conductive target (2) and/or the rotating shaft (8).

2. The radial inductive position sensor (1) according to claim 1,
wherein the substrate (7) is a printed circuit board and the at least one transmitter coil (5) and the at least one receiver coil pair (3, 4) are formed by copper traces on the printed circuit board.

3. The radial inductive position sensor (1) according to claim 1 or claim 2,
wherein the substrate (7) or the printed circuit board is flexible or has a thickness that allows the radial configuration of the substrate (7) or the printed circuit board consists of multiple parts that can be arranged radially around the moving conductive target (2) and/or the rotating shaft (8).

4. The radial inductive position sensor (1) according to any of claims 1 to 3,
wherein the first receiver coil (3) is a sine receiver coil and the second receiver coil (4) is a cosine receiver coil.

5. The radial inductive position sensor (1) according to any of claims 1 to 4,
wherein the receiver coil pair (3, 4), has one period for detecting the absolute position of the moving conductive target (2).

6. The radial inductive position sensor (1) according to any of claims 1 to 4,
wherein the receiver coil pair (3, 4), has multiple periods for detecting a high-resolution position of the moving conductive target (2).

7. The radial inductive position sensor (1) according to claim 5 and claim 6,
comprising a first receiver coil pair (3, 4) having one period and a second receiver coil pair (10, 11) having multiple periods.

8. The radial inductive position sensor (1) according to any of claims 1 to 7,
wherein the moving conductive target (2) has one active portion or multiple active portions.

9. The radial inductive position sensor (1) according to any of claims 1 to 8,
wherein the substrate partially or completely surrounds the moving conductive target (2) and/or the rotating shaft (8).

10. The radial inductive position sensor (1) according to any of claims 1 to 9,
wherein the moving conductive target (2) is arranged inside or outside the radial substrate (7).

11. The radial inductive position sensor (1) according to any of claims 1 to 10,
wherein the at least one transmitter coil (5) and/or the at least one receiver coil pair (3, 4) are implemented twice on the substrate (7), on separate layers or with an interleaved or distributed coil design.

12. A high-resolution position sensor system (13), comprising:
a first inductive position sensor (1), and
a second inductive position sensor (1),
wherein at least one inductive position sensor (1) is a radial inductive position sensor (1) according to any of claims 1 to 11,
wherein the periods of the receiver coil pairs (3, 4) of the first inductive position sensor (1) and the second inductive position sensor (1) are different.

13. The high-resolution position sensor system (13) according to claim 12,
wherein the receiver coil pair (3, 4) of one inductive position sensor (1) has one period for detecting the absolute position of the moving conductive target (2) and the receiver coil pair (3, 4) of the other inductive position sensor (1) has multiple periods for detecting a high-resolution position of the moving conductive target (2) or wherein the periods of the receiver coil pairs (3, 4) of the first inductive position sensor (1) and the inductive second position sensor (1) are different to provide a Nonius scale.

14. A torque sensor system (14) comprising:
a first inductive position sensor (1), and
a second inductive position sensor (1),
wherein at least one inductive position sensor (1) is a radial inductive position sensor (1) according to any of claims 1 to 11,
wherein the first inductive position sensor (1) and the second inductive position sensor (1) are mounted on different ends of a rotating shaft (8) subject to torque.

15. The torque sensor system (14) according to claim 14,
further comprising at least one further inductive position sensor (1) for providing a high-resolution position sensor system (13) in combination with the first inductive position sensor (1) and/or the second inductive position sensor (1).
